**Europäisches Patentamt**

(19) **European Patent Office**

**Office européen des brevets**

(11) Publication number : **0 090 557 B2**

(12) # NEW EUROPEAN PATENT SPECIFICATION

(45) Date of publication of the new patent specification : **27.01.93 Bulletin 93/04**

(51) Int. Cl.⁵ : **F16C 33/66,** F16C 33/36, F16C 19/52

(21) Application number : **83301505.0**

(22) Date of filing : **17.03.83**

(54) Tapered roller bearing.

(30) Priority : **17.03.82 US 359165**

(43) Date of publication of application : **05.10.83 Bulletin 83/40**

(45) Publication of the grant of the patent : **04.03.87 Bulletin 87/10**

(45) Mention of the opposition decision : **27.01.93 Bulletin 93/04**

(84) Designated Contracting States : **DE FR GB IT SE**

(56) References cited :
DD-A- 31 913
DE-A- 1 952 450
DE-A- 2 352 578
DE-A- 2 838 330
FR-A- 2 095 726
FR-A- 2 188 725
US-A- 1 840 607

(56) References cited :
US-A- 3 582 164
US-A- 3 675 978
US-A- 3 811 743
US-A- 4 226 484

(73) Proprietor : **THE TIMKEN COMPANY**
**1835 Dueber Avenue, S.W.**
**Canton, Ohio 44706 (US)**

(72) Inventor : **Jatczak, Chester F.**
**4816 Sharonwood, N.W.**
**Canton Ohio, 44718 (US)**
Inventor : **Lee, Peter W.**
**1922 Dunkeith Drive**
**Canton Ohio 44708 (US)**
Inventor : **Orvos, Peter S.**
**3647 Mulberry Street**
**Uniontown Ohio 44685 (US)**

(74) Representative : **Boydell, John Christopher et al**
**Stevens, Hewlett & Perkins 1 Serjeants' Inn**
**Fleet Street**
**London EC4Y 1LL (GB)**

EP 0 090 557 B2

## Description

This invention relates in general to antifriction bearings and, more particularly, to a tapered roller bearing that is capable of sustained operation in the absence of its normal supply of lubrication, together with a structure incorporating such a bearing.

Tapered roller bearings offer many advantages which other types or combinations of bearings do not. For example, a pair of tapered roller bearings will carry extremely heavy radial and thrust loading, and the individual bearings may be adjusted against one another to control radial and axial play. Due to their large load carrying capacity in both radial and axial directions, it is often possible to replace a combination of three other bearings with only two tapered roller bearings and still achieve the desired bearing life.

Due to the tapered configuration of the rollers radial loads on the rollers create an axial force component which tends to expel the rollers from the annular space between the two races, that is, from between the cup and cone. This expulsion force is resisted by means of a thrust rib on one of the races, usually the cone. Thus, as the cup and cone rotate relative to each other the large diameter end faces of the tapered rollers experience rolling and sliding contact against the thrust rib. Unless a film of lubricant is maintained be tween the roller end faces and the thrust rib, the bearing will overheat and sustain damage.

In some machinery it is important to have safety features which will enable the machinery to operate even though its lubricating system is disabled. This is particularly true of helicopters.

DE-A-1952450 discloses a tapered roller bearing in which a rib ring is disposed in a fixed position axially abutting the outer race and projects beyond the large end of the raceway of that race so that the large ends of the tapered rollers bear against the rib ring.

DE-A-2838330 discloses the use of a porous, lubricant-impregnated rib ring disposed against one axial end of the rollers in a cylindrical roller bearing.

The present invention seeks to provide a tapered roller bearing that will remain operable for a reasonable time after the loss of normal lubrication, and to do this while being operated at high angular velocities while carrying heavy loads.

According to the invention there is provided a tapered roller bearing comprising an inner race having an outwardly presented raceway that is tapered, an outer race having an inwardly presented raceway that is tapered and surrounds the raceway of the inner race, tapered rollers arranged in a row between the tapered raceways of the two races and contacting those raceways along their bodies, a cage for the rollers and a rib ring which is normally mounted in a fixed position with respect to one of the races and projects generally radially beyond the large end of the raceway for that race, such that the large ends of the tapered rollers bear against said rib ring, characterised in that the abutment face of the rib ring engaged by the large ends of the rollers is conically inclined, in that an end of the cage extending axially beyond the large ends of the rollers is located in close proximity to another surface of the rib ring, and in that the rib ring is formed from compacted and sintered powdered metal the pores of which are charged with a liquid lubricant and the pores of which are open at least on said abutment face and said other surface, whereby the rib ring is capable of releasing the absorbed lubricant to lubricate the larger end faces of the rollers and the end of the cage if the bearing loses its normal supply of lubricant, the rib ring being desired from M2 powdered metal or from 46100 powdered metal or from CBS 1000 M (trade mark) powdered metal

The present invention is embodied in a tapered roller bearing having a rib ring along which the rollers run, with the ring having pores that are exposed at the surface against which the large ends of the rollers bear, so that the rib ring will absorb a lubricant and release it to lubricate the roller ends in the event of the bearing losing its normal supply of lubrication.

In order that the invention may be better understood, an embodiment thereof will now be described by way of example only and with reference to the accompanying drawings in which:-

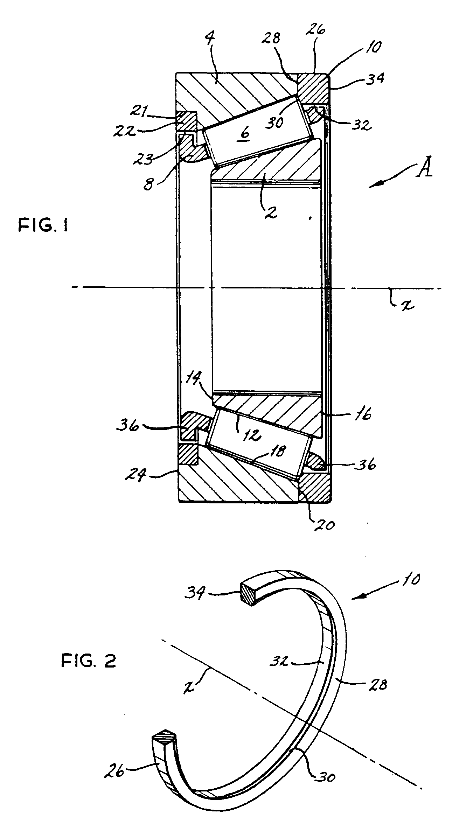

Figure 1 is a sectional view of a tapered roller bearing provided with a thrust rib constructed in accordance with and embodying the present invention; and

Figure 2 is a perspective view of the rib ring forming part of the bearing shown in Figure 1.

Referring now to the drawings, a single row tapered roller bearing A has an axis X of rotation and is designed to carry both radial loads and thrust loads and to do this for a reasonably long time after the normal supply of lubrication to the bearing A is interrupted. The bearing A includes several basic components-namely a cone 2, a cup 4 that surrounds the cone 2, a complement of tapered rollers 6 arranged in a single row between the cone 2 and cup 4, a cage 8 for maintaining the correct spacing between the rollers 6, and a rib ring 10 that serves as an abutment for preventing the rollers 6 from being expelled from the space between the cone 2 and cup 4.

Preferably the cone 2 and cup 4 are formed from a high quality wrought bearing steel of the type commonly used in bearings. The cone 2 has a tapered raceway 12 which at its small end runs out to a cone front face 14 and at its large end runs out to a cone back face 16. Both of the cone end faces 14 and 16 are perpendicular to the axis X. The cup 4, likewise, has a tapered raceway 18 which at its large end runs out to a cup front face 20. Its small end is located adjacent to a rabbet 21 which opens out of the end of the cup 4. The rabbet 21 contains an insert 22 having two exposed surfaces, one being a cylindrical surface 23 that is presented inwardly toward the axis X of rotation and merges with the large end of the tapered raceway 18. The other exposed surface is along and indeed forms part of the cup back face 24. Again both end faces 20 and 24 are squared off with respect to the axis X. Thrust loading and reaction loads derived from radial loads are transmitted through the cone back face 16 and cup back face 24. The raceways 12 and 18 are on apex, meaning that if each is extended to an apex, those apexes will be located at a common point along the axis X of rotation.

The tapered rollers 6 occupy the space between the cone 2 and cup 4 and along their tapered side faces contact the two raceways 12 and 18, there being line contact between each roller 6 and the raceways 12 and 18. Since the raceways are on apex, rolling contact will occur be tween the roller bodies and the raceways 12 and 18 when the cup 4 rotates relative to the cone 2 or vice-versa. The rollers 6 are axially positioned by the rib ring 10 against which the large diameter ends of the rollers 6 bear. In this regard, the large diameter ends of the rollers 6 are spherical, for that configuration maintains the rollers 6 in the proper orientation between the raceways 12 and 18. Like the cone 2 and cup 4, the rollers 6 are preferably formed from wrought steel of a high quality bearing grade.

The cage 8 tapers to conform generally with the angular disposition of the rollers 6 and has pockets in which the rollers 6 are received. At each of its ends, the cage 8 turns outwardly to provide end rings 36. The large diameter end ring 36 is located in close proximity to the inside face of the rib ring 10, while the small diameter end ring 36 is located in close proximity to the cylindrical surface 23 on the insert 22 of the cup 4. Indeed, the rib ring 10 and insert 22 serve to position the cage 8 in the radial direction so that the cage 8 is in effect piloted. The cage 8 is preferably made of steel.

The rib ring 10 fits against the front face 20 of the cup 4 and projects inwardly beyond the large end of the cup raceway 18 so as to prevent the rollers 6 from moving axially out of the annular space between the cone 2 and cup 4. In the actual operation of the bearing A the cup 4 and rib ring 10 are clamped together so that the force exerted on the rib ring 10 by the rollers 6 does not separate the ring 10 from the cup 4. The rib ring 10 is of unitary construction and includes a cylindrical outer surface 26 which is the same diameter as the outer surface of the cup 4. It also has an end face 28 which is squared off with respect to the axis X, and it is along this face that the ring 10 abuts against the front face 20 of the cup 4. The end face 28 merges into a roller abutment face 30 which is generally perpendicular to the cup raceway 18 and hence oblique to the axis X of rotation. The abutment face 30 extends inwardly to a cylindrical inner face 32 which serves as a guide for the large end of the cage 8. Finally the ring 10 has a front face 34 which is parallel to the end face 28 and extends be tween the outer and inner cylindrical surfaces 26 and 32.

Unlike the cone 2, the cup 4, and the tapered rollers 6, the rib ring 10 is formed from a porous alloy steel that has been impregnated with a liquid lubricant. Moreover, the pores of the steel are exposed at least along the roller abutment face 30 and the cylindrical inner face 32 as well. The pores hold the liquid lubricant. The insert 22 is formed from the same porous alloy steel that has likewise been impregnated with a liquid lubricant.

During operation of the bearing A the cone 2 rotates within the cup 4 or the cup 4 revolves around the cone 2. In either case, the tapered rollers 6 roll along the two raceways 12 and 18, there being rolling contact, that is no significant sliding, between the tapered bodies of the rollers 6 and the raceways 12 and 18. The large diameter end faces of the rollers 6 bear against the abutment face 30 of the rib ring 10, and thus the ring 10 positions the rollers 6 in the axial direction. In this regard, any radial load that is applied to the bearing A will be transmitted through the rollers 6, and by reason of the tapered geometry, this load is translated into an axial component being directed toward the large ends of the raceways 12 and 18. Indeed, the axial component constitutes an expulsion force which would drive the rollers 6 out of the bearing A were it not for the obstruction caused by the abutment face 30 of the rib ring 10. In contrast to the rolling contact between the bodies of the rollers 6 and the raceways 12 and 18, the contact between the large end faces of the rollers 6 and the abutment face 30 is combined sliding and rolling. Since the cage 8 is piloted by the rib ring 10 and the cup insert 22, sliding contact exists between the end rings 36 on the cage 8 and the cylindrical surface 23 of the cup insert 22 and the cylindrical face 32 of the rib ring 10.

Normally, a liquid lubricant is introduced into the bearing A at the small ends of the raceways 12 and 18 and is pumped through the bearing A by the rollers 6. This lubricant forms a thin, low friction, film along the surfaces at which rolling and sliding contact exist in the bearing A-namely along the raceways 12 and 18, along the abutment face 30, and along the cylindrical surfaces 23 and 32.

Should the bearing A lose its normal supply of lubrication, the lubricant retained within the pores of the rib ring 10 will emerge from the pores of the rib ring 10 at the abutment face 30 and for a reasonable time will supply sufficient lubrication to prevent excessive friction from developing between the large ends of the rollers 6 and the abutment face 30. Indeed, even at high speeds and under heavy radial and thrust loads the bearing A will operate for preferably 30 minutes without failure. This provides adequate time to recognise the loss of the normal supply of lubricant and to shut down the machinery containing the bearing A without damaging that machinery.

Not only does the rib ring 10 supply lubrication to the large ends of the rollers 6, but together with insert 22 it also supplies lubrication to the large and small end rings 36 of the cage 8. This prevents excessive friction from developing between the large end ring 36 and the cylindrical inner face 32 of the rib ring 10 and from likewise developing between the small end ring 36 and cylindrical surface 23 of the cup insert 22 Having adequate lubrication in these regions is also important, for it is along the surface 23 and face 32 that the cage 8 is piloted. Without adequate lubrication, the cage 8 could weld to the rib ring 10 and insert 22.

Perhaps the best procedure for manufacturing the rib ring 10 is to compress a suitable powdered metal, such as a powdered high strength, high temperature, bearing steel, into a ring form that roughly approximates the rib ring 10, but is slightly larger in cross-section. The compression should be sufficient to compact the powder to a density of between 70% and 85% of the maximum possible or theoretical density, which would be the density of comparable wrought steel. The metal powder contains a lubricant so that the powder flows with relative ease within the die in which the compaction takes place. This results in a ring form of uniform density. Once the ring form is acquired, it is heated to between 732°C (1350°F) and 816°C (1500°F) to eliminate the lubricant that is within the compacted metal powder.

Next the ring form is sintered by heating it still further within a vacuum or in a reducing atmosphere to between 1093°C (2000°F) and 1204°C (2200°F) for at least 20 minutes. It is then cooled to about 538°C (1000°F) in a vacuum and then to room temperature in nitrogen gas.

Thereafter, the sintered ring form is heat treated by heating and quenching, and the temperature to which it is heated and the composition of the quenching medium are to a large measure determined by the metal of the ring form.

Either before or after the heat treatment, and preferably after, the sintered ring form is machined to bring it to the proper configuration and dimensions. This machining may be along all of the faces 26, 28, 30, 32 and 34, and most certainly should be along the abutment face 30 against which the tapered rollers 6 bear, along the end face 28 at which the rib ring 10 is fitted against the cup 4, and along the cylindrical inner face 32 which pilots the cage 8. The machining may involve both turning and grinding, and certainly grinding. Both of these machine operations tend to obliterate the pores at the machined surface. In other words, the turning and grinding tends to smear over and cover the pores, producing a thin metal surface layer which is commonly referred to as the "Beilby layer".

The Beilby layer inhibits the absorbtion of a lubricant by the rib ring 10, and much worse prevents the lubricant from being released at the critical abutment face 30 once it has been absorbed. To overcome this problem, the Beilby layer is removed by immersing the machined ring form in a suitable etchant.

Once the ring form is removed from the etchant, the etchant remaining on it is neutralised. After cleaning the ring form, it is impregnated with lubricant by immersing it within a suitable liquid lubricant which has been warmed to about 149°C (300°F) to reduce its viscosity. This produces the rib ring 10 for the bearing A.

The insert 22 is formed in essentially the same manner, it being etched at least along its inwardly presented cylindrical surface 23. It is inserted into the rabbet 21 of the cup 4 and welded in place.

Suitable material for the rib ring 10 and insert 22 are powders of high quality steel such as M2, CBS1000M (trade mark) and 46100.

The tool steel alloy known as M2 has essentially the following composition by weight:

| C | .85% | Mo | 5.0% |
|---|------|----|------|
| Mn | .30% | W | 6.3% |
| Si | .30% | V | 1.85% |
| Cr | 4.15% | Fe | balance |

To convert M2 powder into a rib ring 10 or insert 22, the powder is first blended with Acrawax (trade mark) lubricant, the lubricant amounting to .5% by weight of the powder The blend of M2 powder and lubricant is then compacted in a die to provide a ring form having the general shape of the desired rib ring or insert. The density of this ring form should be about 75% of theoretical. Next the compacted ring form is heated to 732°C (1350°F) to 816°C (1500°F) in a vacuum and maintained at that temperature for 30 to 60 minutes to eliminate the lubricant used in the compacting step. Thereafter the ring form is heated to at least 1093°C (2000°F) in a vacuum and

4

EP 0 090 557 B2

maintained at that temperature for 15 to 45 minutes to sinter the ring form. At the end of this time it is cooled to about 482°C (900°F) in a vacuum and then to room temperature in nitrogen gas.

Next, the sintered ring form is heat treated by preheating it to about 788°C (1450°F) in a vacuum and maintaining it at that temperature for about 30 minutes. Then its temperature is raised to about 1191°C (2175°F) and held there, while still in a vacuum, for about 5 minutes. It is then quenched in nitrogen gas maintained at room temperature.

Following the quench, the ring form is tempered by heating it within a vacuum to about 538°C (1000°F) and holding it at that temperature for about 2 hours. This procedure is repeated so that the ring form is tempered twice. After the tempering the particle hardness of the ring form exceeds Rc 60, and the microstructure of the ring form consists of tempered martensite with $M_6C$ carbides, but no retained austenite. Its porosity remains about 25%.

Next the ring form is machined by grinding it wet in soluble oil coolant to provide finish grinds on all of its surfaces. Then it is ultrasonically cleaned in a solvent. Thereafter the machined ring form is etched by immersing it in an acid etch for several minutes. The etch removes the Beilby layer and exposes the pores of the sintered alloy. After the etch, the ring form is immersed in a basic solution to neutralise the etchant, and this solution should be agitated at an ultrasonic frequency. Then the ring form is cleaned by immersing in a solvent which is likewise agitated ultrasonically. Thereafter the ring form is heated to remove the cleaning solution.

Finally, the ring.form is impregnated with a lubricant, this being achieved by immersing it in a low viscosity lubricant for 2 hours, the lubricant being maintained at about 149°C (300°F). This completes the rib ring 10 or insert 22.

A lubricant impregnated block manufactured from M2 steel in accordance with the foregoing procedure such that it had a ground and etched surface was subjected to a dynamic load applied through a ground surface on another block of hardened wrought steel, the load being dynamic in the sense that sliding contact existed between the ground surfaces of the lubricant impregnated. block and the wrought steel block. Indeed, the relative velocity between the two blocks amounted to 10Km/h (550 ft/min), while the initial Hertzian contact stress was $275,800 KN/m^2$ (40,000 lbs/in²). Without any lubrication, other than that derived from the pores of the lubricant impregnated block, this dynamic load was sustained far in excess of 30 minutes. This indicates that the bearing A operating under a similar dynamic load at the abutment face 30 of its rib ring 10 would remain operable for at least 30 minutes after interruption of its normal supply of lubricant.

The steel known as 46100 has essentially the following composition by weight:-

| C | 1.00% | Ni | 2.0% |
|---|---|---|---|
| Mn | .25% | Mo | 0.5% |
| | | Fe | balance |

To manufacture the rib ring 10 or insert 22 from 46100 metal powder it is first blended with Acrawax (trade mark) to lubricate the powder. Next it is compacted to a density of about 75% theoretical to produce a ring form. Thereafter the ring form is heated to 732°C (1350°F) to 816°C (1500°F) for 15 to 45 minutes. It is next cooled to about 482°C (900°F) in a vacuum and thereafter to room temperature in nitrogen gas.

The sintered ring form is thereupon heat treated by elevating its temperature to about 816°C (1500°F) for 15 to 45 minutes in an endothermic atmosphere having a .25% $CO_2$ by volume, and then quenching it in oil. Next it is tempered by heating it to about 182°C (360°F) for about one hour and allowing it to cool to ambient temperature. At this point its particle hardness exceeds Rc 60 and it contains essentially 80% tempered martensite and 20% of austenite, and it has about 25% porosity.

Next, the 46100 ring form is machined in the same manner as the M2 ring form and is etched for several minutes to remove the Beilby layer. The ring form is thereafter neutralised, cleaned, heated, and impregnated with lubricant in the manner previously described, whereupon it becomes the rib ring 10 or inert 22.

An impregnated block formed from 46100 steel in accordance with the foregoing procedure was subjected to the same dynamic test as the M2 block It sustained an initial Hertzian contact stress of $275,800 KN/m^2$ (40,000 lbs/n²) at 10 Km/h (550 ft/min) applied by a wrought steel block and endured that load for over 30 minutes without any lubrication other than that derived from the pores of the block.

The steel known under the trade mark CBS1000M has essentially the following composition by weight:-

5

| C | .85% | Cr | 1.05% |
| Mn | .50% | Ni | 3.0% |
| Si | .50% | Mo | 4.5% |
| | | V | .35% |
| | | Fe | balance |

It is converted into a ring form and thereafter into a rib ring 10 or insert 22 using substantially the same procedure as 46100 powdered metal is converted into a rib ring 10 or insert 22.

A block of CBS1000M steel formed in accordance with the procedure for making the 46100 rib ring and impregnated with oil will withstand an initial Hertzian stress of 275,800 KN/m$^2$ (40,000 lbs/in$^2$) at 10 Km/h (550 ft/min) for over 30 minutes without any additional lubrication.

In lieu of positioning a porous rib ring 10 at the front face of the cup 4, it may be placed at the back face of the cone 2 or it may take the form of an insert fitted to the cone. In either case it will have a slightly different configuration and will project outwardly from the large end of the cone raceway 12. Also, the insert 22, instead of being confined to a rabbet 21, may extend across the entire back face of the cup 4 much like the rib ring 10 at the opposite end of the cup 4. In that case the cup 4 would not contain a rabbet 21. Similarly, a modified insert may be installed in the cone at the small end of the cone raceway or it may take the form of a separate ring at the small end of the cone, that is against the cone front face.

There has been described a bearing of the type stated that affords adequate time to recognise the disruption of lubrication to it and also adequate time to shut down machinery into which it is incorporated so that the machinery is not damaged. The bearing is simple in construction and relatively easy to manufacture.

## Claims

1. A tapered roller bearing comprising an inner race (2) having an outwardly presented raceway (12) that is tapered, an outer race (4) having an inwardly presented raceway (18) that is tapered and surrounds the raceway of the inner race, tapered rollers (6) arranged in a row between the tapered raceways of the two races and contacting those raceways along their bodies, a cage (8) for the rollers and a rib ring (10) which is normally mounted in a fixed position with respect to one of the races and projects generally radially beyond the large end of the raceway for that race, such that the large ends of the tapered rollers bear against said rib ring, characterised in that the abutment face (30) of the rib ring engaged by the large ends of the rollers is conically inclined, in that an end of the cage (8) extending axially beyond the large ends of the rollers is located in close proximity to another surface (32) of the rib ring (10), and in that the rib ring is formed from compacted and sintered powdered metal the pores of which are charged with a liquid lubricant and the pores (20) of which are open at least on said abutment face and said other surface (32), whereby the rib ring is capable of releasing the absorbed lubricant to lubricate the larger end faces of the rollers and the end of the cage if the bearing loses its normal supply of lubricant, the rib ring (10) being derived from M2 powdered metal or from 46 100 powdered metal or from CBS 1000 M (trade mark) powdered metal.

2. A bearing according to claim 1, wherein the rib ring (10) along its abutment face (30) and its other surface (32) has been machined and thereafter etched sufficiently to open the pores of the porous metal at the abutment face.

3. A bearing according to claim 1 or claim2, wherein the compacted and sintered powdered metal of the rib ring (10) has a density of between about 70% and 85% of theoretical density.

4. A bearing according to any one of the preceding claims, wherein the rib ring (10) is positioned adjacent to the end of the outer race (4) and projects inwardly past the large diameter end of the raceway (18) for the outer race (4).

5. A bearing according to claim 4 and further comprising another ring (22) located beyond the small ends of the raceways, the other ring having a guide surface (23) and being formed from the porous metal, the pores

6

of which are open along the guide surface, whereby the other ring will also absorb a liquid lubricant; and wherein the cage (8) also extends beyond the small ends of the rollers where it is located in close proximity to the guide surface (23) of the other ring, which surface serves to pilot the cage.

6. A bearing according to claim 5 wherein the outer race (4) contains a rabbet (21) located beyond the small end of its raceway (18), and the other ring (22) is an insert that is fitted into the rabbet with the guide surface (23) being presented towards the inner race (2).

## Patentansprüche

1. Kegelrollenlager mit einem inneren Laufring (2) mit nach außen gewandter kegeliger Lauffläche (12), einem äußeren Laufring (4) mit einwärts gewandter kegeliger Lauffläche (18), die die Lauffläche des inneren Laufrings umgibt, Kegelrollen (6), die zu einer Reihe zwischen den kegeligen Laufflächen der beiden Laufringe angeordnet sind und sie entlang ihrer Kegelkörper berühren, einem Käfig (8) für die Rollen und einem Rippenring (10), der normalerweise in einer feststehenden Position in bezug auf einen der Laufringe angeordnet ist und im wesentlichen radial über das große Ende der Lauffläche für diesen Laufring hinausragt, so daß die großen Enden der Kegelrollen gegen den Rippenring anliegen, dadurch gekennzeichnet, daß die Anlagefläche (30) des mit den großen Enden der Rollen in Eingriff stehenden Rippenringes konisch geneigt ist, daß ein axial über die großen Enden der Kegel hinaus vorstehendes Ende des Käfigs (8) in großer Nähe zu einer anderen Oberfläche (32) des Rippenringes (10) angeordnet ist, und daß der Rippenring aus verdichtetem und gesintertem pulverisiertem Metall gebildet ist, dessen Poren mit einem flüssigen Schmiermittel gefüllt sind, wobei die Poren (20) zumindest an der Anlagefläche und der anderen Oberfläche (32) offen sind, wodurch der Rippenring dazu fähig ist, das absorbierte Schmiermittel freizugeben, um die größeren Endflächen der Rollen und das Ende des Käfigs zu schmieren, falls das Lager seine normale Schmiermittelzufuhr verliert, wobei das Ausgangsmaterial für den Rippenring (10) ein Metallpulver des Typs M2 oder 46 100 oder CBS 1000 M (Warenzeichen) ist.

2. Lager nach Anspruch 1, bei dem der Rippenring (10) entlang seiner Anlagefläche (30) und seiner anderen Oberfläche (32) spanend bearbeitet und danach weit genug geätzt worden ist, um die Poren des porösen Metalls an der Anlagefläche zu öffnen.

3. Lager nach einem der Ansprüche 1 oder 2, bei dem das verdichtete und gesinterte Metallpulver des Rippenrings (10) eine Dichte zwischen etwa 70% und 85% der theoretischen Dichte hat.

4. Lager nach einem der vorhergehenden Ansprüche, bei dem der Rippenring (10) neben dem Ende des äußeren Laufrings (4) angeordnet ist und über des großdurchmessrige Ende der Lauffläche (18) des äußeren Laufrings (4) hinaus einwärts vorsteht.

5. Lager nach Anspruch 4, weiterhin mit einem zusätzlichen Ring (22), der außerhalb der kleinen Enden der Laufringe angeordnet ist, eine Führungsfläche (23) hat und aus dem porösen Metall gefertigt ist, wobei die Poren dieses Ringes entlang der Führungsfläche offen sind, so daß der zusätzliche Ring ebenfalls ein flüssiges Schmiermittel absorbiert; und wobei der Käfig (8) ebenfalls über die kleinen Enden der Rollen hinaus vorsteht, wo er in großer Nähe zur Führungsfläche (23) des zusätzlichen Ringes liegt, die zum Führen des Käfigs dient.

6. Lager nach Anspruch 5, bei dem der äußere Laufring (4) eine jenseits des kleinen Endes seiner Lauffläche (18) angeordnete Nut (21) enthält und der zusätzliche Ring (22) ein Einsatz ist, der so in die Nut eingesetzt ist, daß die Führungsfläche (23) dem inneren Laufring (2) zugewandt liegt.

## Revendications

1. Roulement à rouleaux coniques, comportant une bague intérieure (2) comprenant une piste (12), située à l'extérieur, qui est conique, une bague extérieure (4) comprenant une piste (18) située à l'intérieur, qui est conique et qui entoure la piste qui se trouve sur la bague intérieure, des rouleaux coniques (6) disposés sur une rangée entre les pistes coniques des deux bagues et venant au contact de ces pistes le long de leur corps, une cage (8) pour les rouleaux ainsi qu'une rondelle d'appui (10) qui est normalement montée fixe par rapport à l'une des bagues, et de façon générale, déborde radialement au-delà du grand côté de la piste pour cette bague, de sorte que les grands côtés des rouleaux portent sur cette rondelle d'appui, caractérisé en ce que la face de butée (30) de la rondelle d'appui contre laquelle les grands côtés des rouleaux portent est conique, en ce qu'une extrémité de la cage (8) qui s'étend axialement au-delà des grands côtés des rouleaux est située à proximité d'une autre surface de la rondelle d'appui (10), et en ce que la rondelle d'appui (10) est fabriquée en une poudre de métal compacté et fritté, dont les pores contiennent un lubrifiant liquide et sont ouverts sur au moins ladite face de butée et ladite autre surface (32), de sorte que la rondelle d'appui est apte à libérer le lubrifiant absorbé de façon à lubrifier les faces des grands côtés des rouleaux et l'extrémité de la cage, dans le cas où le roulement perdrait son alimentation normale en lubrifiant, la rondelle d'appui (10) étant fabriquée à partir de métal en poudre M2 ou de métal en poudre 46100 ou de métal en poudre CBS 1000 M (marque commerciale).

2. Roulement selon la revendication 1, dans lequel la rondelle d'appui (10) a été usinée le long de sa face de butée (30) et de son autre surface (32) puis suffisamment attaquée par voie chimique pour ouvrir les pores du métal poreux à la face de butée.

3. Roulement selon l'une quelconque des revendications 1 ou 2, dans lequel le métal en poudre compacté et fritté de la rondelle d'appui (10) a une densité valant entre environ 70 % à 85 % de la densité théorique.

4. Roulement selon l'une quelconque des revendications précédentes, dans lequel la rondelle d'appui (10) est placée près de l'extrémité de la bague extérieure (4) et déborde vers l'intérieur au-delà du côté de grand diamètre de la piste (18) de la bague extérieure (4).

5. Roulement selon la revendication 4, comportant en outre une autre rondelle (22) située au-delà des petits côtés des pistes, l'autre rondelle présentant une surface de guidage (23) et étant fabriquée avec le métal poreux, dont les pores sont ouverts le long de la surface de guidage, de sorte que l'autre rondelle va également absorber un lubrifiant liquide ; et dans lequel la cage (8) s'étend également au-delà des petits côtés des rouleaux où elle est située à proximité immédiate de la surface de guidage (23) de l'autre bague, surface qui sert à piloter la cage.

6. Roulement selon la revendication 5, dans lequel la bague extérieure (4) présente une feuillure (21) située au-delà du petit côté de sa piste (18), et dans lequel l'autre bague (22) est une garniture ajustée dans la feuillure, la surface de guidage (23) étant placée en direction de la bague intérieure (2).

EP 0 090 557 B2

FIG. 1

FIG. 2